# EUROPEAN PATENT APPLICATION

(11) **EP 1 149 653 A2**
(43) Date of publication of application: **31.10.2001**
(21) Application number: 01201508.7
(22) Date of filing: 26.04.2001
(51) Int. Cl.: B23K 10/00

(54) **Plasma burner.**

(30) Priority: 27.04.2000 BE 200000298
(71) Applicant: Van Dyck, Jan Ferdinand Ludovica, 2060 Antwerpen (BE)
(72) Inventor: Van Dyck, Jan Ferdinand Ludovica, 2060 Antwerpen (BE)
(74) Representative: Donné, Eddy

(57) **Abstract**

The invention concerns a plasma burner for cutting, containing a support (9) and a plasma torch (11) provided on it, whereby the plasma torch (11) is provided on a head (10), and can rotate in relation to this head (10) according to an axis which is directed in a direction, hereafter called the direction X, which stands diagonally to its longitudinal direction, whereas means (13) are provided to make this plasma torch (11) rotate around said axis in relation to the head (10), and the head (10) can move in relation to the support (9) at least in the direction Y standing at right angles to it, whereas the plasma burner (3) contains means (31) to make the head (10) move at least in the direction Y in relation to the support (9).

## Description

The present invention concerns a plasma burner for cutting for example metal plates and such, containing a support and a plasma torch provided on it.

Such plasma torches are generally known. Their operation is based on the principle of recombining ionised gas atoms with free electrons. They are usually erected above a table which can be moved in its longitudinal direction and sideways, and, during the cutting, the table is subjected to a computer-controlled movement, such that the required shape is cut from a plate placed on the table. The table can usually move slightly in the vertical direction so as to absorb corrugations and differences in thickness.

When the plasma torch is placed at right angles to the plate during the cutting, a V-shaped cut is burnt in the plate, since the energy is strongly reduced as the metal of the plate is penetrated more deeply.

This V-shaped cut has for a result that the edge of a piece cut from the plate is directed slantingly in relation to the top side thereof, which may be undesirable or inadmissible for the further processing or use of this piece. Also, said edge must be made straight by means of an additional treatment.

In order to remedy this problem, the idea has risen to place the plasma torch at an angle in relation to the plate, and thus to make its inclination in relation to the support adjustable.

Since the angle at which the plasma torch has to be placed is not always the same, the plasma torch is mounted such on the support that it can move according to the segment of a circle in the known plasma burners, so that the intersection of the plasma torch, i.e. the point where the ray hits the surface of the plate, cannot be modified when the angle is modified.

Due to said adjustability according to the segment of a circle, the construction is rather complicated, however.

Moreover, the position of the intersection of the plasma torch alters when the distance between the plasma torch and the plate is altered.

In order to correct this deviation, the entire support can be moved in height in relation to the table with the plate in these known plasma burners, as a result of which the construction is rather heavy and expensive, and which usually slows down the operation.

Also, the present invention aims a plasma burner which excludes the above-mentioned and other disadvantages and which allows for a quick adjustment of the position of the plasma torch on the one hand, such that a cut is obtained with one side perpendicular to the plate surface, and which nevertheless has a relatively simple design on the other hand.

To this aim, the plasma torch is provided on a head, and it can rotate in relation to this head according to an axis which is directed in a direction, hereafter called the direction X, which stands diagonally to its longitudinal direction, whereas means are provided to make this plasma torch rotate around said axis in relation to the head, and the head can move in relation to the support at least in the direction Y standing at right angles to it, whereas the plasma burner contains means to make the head move at least in the direction Y in relation to the support.

The lateral movement of the point of the plasma torch which is created when it tilts in relation to the head, can be absorbed in this manner.

Preferably, the head can also be moved in the direction X in relation to the support, and the plasma burner contains means to move this head in the direction X in relation to the support.

As a result, it is possible to cut out small figures by merely moving the head in relation to the support, which can be done much faster than when this has to be done by moving the table and the plate.

The head can be moved in the directions X and Y as it can be moved in a linear manner in one of these directions, preferably in the direction Y, and as moreover it can be rotated in relation to the support around an axis which is at right angles to these directions and which is thus directed in the direction Z, whereas the means for moving the head in the directions X and Y contain means to make the head rotate around an axis in the direction Z, and means to move the head in relation to the support in the direction X or Y in a linear manner, and thus preferably in the direction Y.

To this end, the head can be moved in a linear manner in relation to a supporting member which is fixed to a shaft directed in the direction Z which is mounted in the support in a rotating manner.

The small movement of the point of the plasma torch in this direction Z in relation to the head during its rotation can be compensated by moving the table with the plate to be cut in the direction Z, but preferably this is done by moving the head in this direction, and thus also the head can be moved in said direction Z in relation to the support, whereas the plasma burner contains means to move the head in this direction Z in relation to the support.

The means for rotating the shaft directed onto the supporting member and in the direction Z, the means for rotating the head in a linear manner in relation to the supporting member, at right angles to the direction Z, and the means for moving said shaft in the direction Z, each contain a motor provided on the support.

The means for rotating the plasma torch in relation to the head are provided on the head and contain for example a motor provided on the head and a transmission between this motor and a shaft onto which the plasma torch is fixed.

In order to better explain the characteristics of the invention, the following preferred embodiment of a plasma torch according to the invention is described as an example only without being limitative in any way, with reference to the accompanying drawings, in which:
figure 1 represents a cutting device which is provided with a plasma torch according to the invention;
figure 2 represents a front view of the plasma torch from the cutting device in figure 1 to a larger scale;
figure 3 represents a side view of the plasma torch in figure 2.

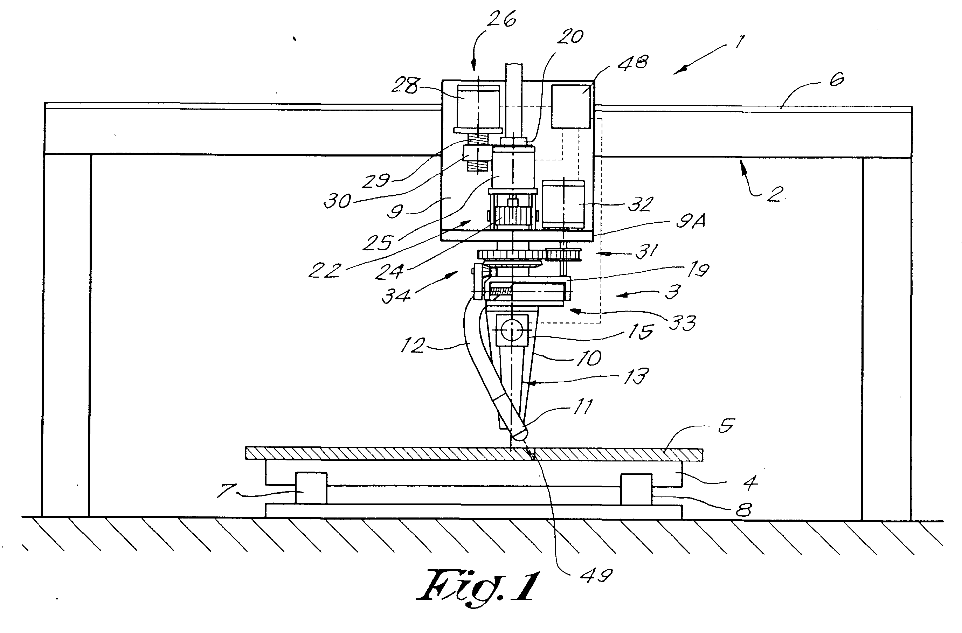

Figure 1 represents a cutting device 1 which mainly consists of a bridge 2 onto which is provided a plasma burner 3 and a table 4 onto which has been placed a plate 5 which has to be cut.

The plasma burner 3 and the table 4 can be moved in relation to one another, for example as the table 4 can be moved in at least two directions, namely the direction X and Y, but preferably in three directions directed towards one another, the directions X, Y and Z, or, as is represented in figure 1, as the plasma burner 3 can be moved as a whole over a guiding strut 6 which is part of the bridge 2, whereas the table 4, onto which the plate 5 is placed, can be moved over rails 7-8 which are situated in the direction which is perpendicular to the direction of movement of the plasma burner 3.

The table 4 is normally horizontal, so that the directions X and Y are situated in the horizontal plane and the direction Z is the vertical direction. In the following description will be assumed that this table 4 is horizontal, and consequently the plasma burner 3 is erected vertically.

The movement of the table 4 is provided for by computer-controlled drive means which are not represented in figure 1.

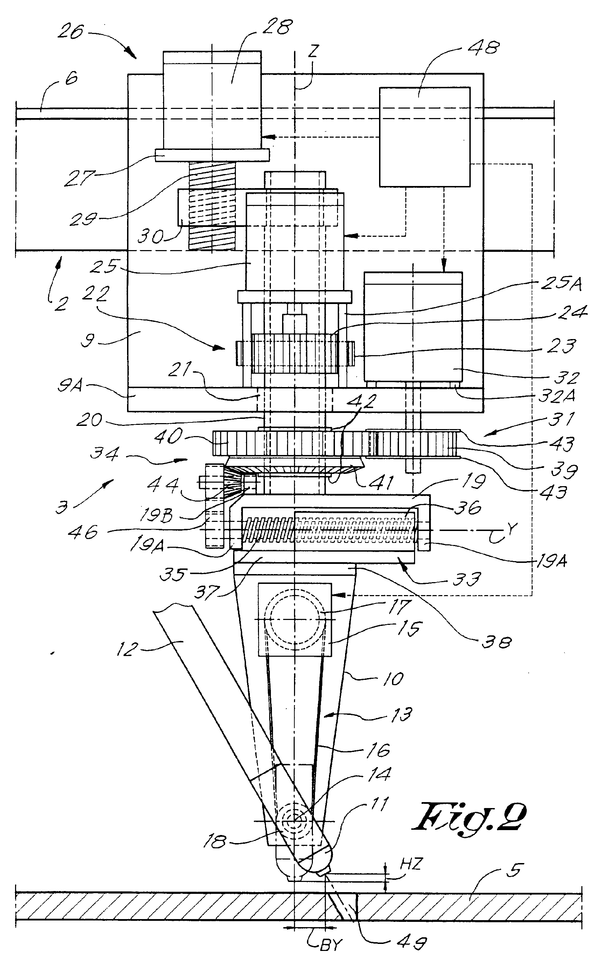

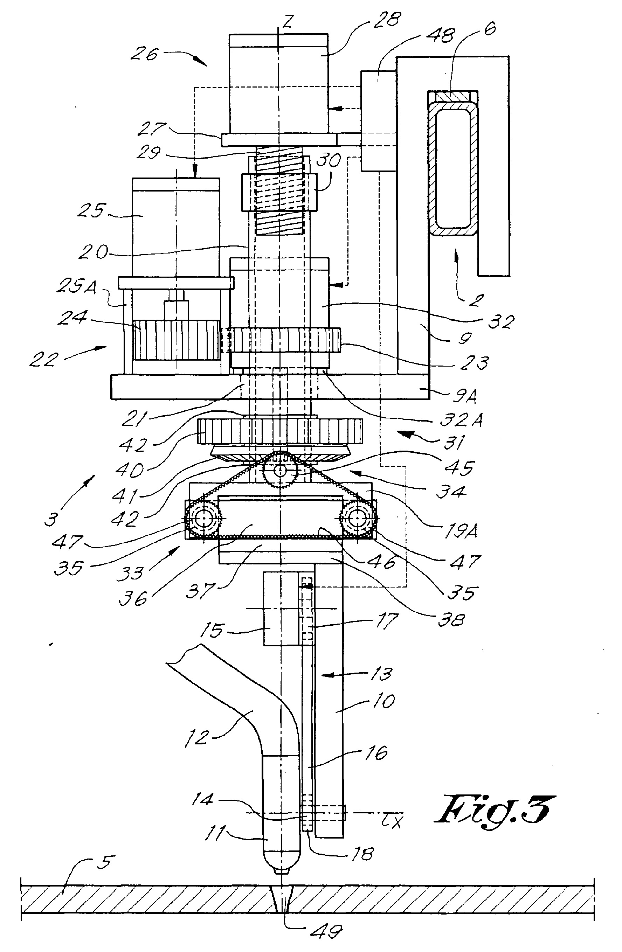

As is represented in greater detail in figures 2 and 3, the plasma burner 3 consists of a support 9 which can be moved over said guiding strut 6, a vertical arm or head 10 which is carried by this support 9, and a plasma torch 11, which is connected to a plasma supply source which is not represented in the drawings via a flexible pipe 12.

The plasma torch 11 can be rotated in relation to the head 10 around a geometric axis which is directed in the direction X by means 13, and it is fixed, either directly or by means of a support, on a horizontal shaft 14 which is bearing-mounted in the lower end of the head 10.

The above-mentioned means 13 contain an electric motor 15 which is fixed on the top side of the head 10, and a transmission consisting of a geared belt 16 provided over geared belt wheels 17 and 18 which are fixed on the shaft of the motor 15 and on the shaft 14 respectively.

The head 10 is suspended on a supporting member 19 in such a way that it can be moved in a linear manner, in the direction Y and thus crosswise to the above-mentioned direction X.

The supporting member 19 is fixed itself to the lower end of a vertical hollow shaft 20 or bush, and thus directed in the direction Z, which is mounted on the support 9 in a rotating manner, but also such that it can be moved in the height and thus in the direction Z.

The hollow shaft 20 protrudes through a guide bush 21 such that it can be rotated and shifted, which is provided in a lower horizontal part 9A of the support 9.

The above-mentioned flexible pipe 12 extends through the supporting member 19 and the hollow shaft 20.

The hollow shaft 20 can be rotated around the Z-axis by means 22 containing a gear wheel 23 which is fixed on the shaft 20, and it meshes in a gear wheel 24 which is fixed on the shaft of en electric motor 25, fixed on the above-mentioned horizontal part 9A of the support 9 by means of a support 25A.

In order to keep the gear wheels 23 and 24 engaged while the hollow shaft 20 carries out a vertical movement, one of these gear wheels 23 and 24, in the given example the gear wheel 24, is considerably thicker than the other.

According to a variant, the gear wheel 23 can be provided on the shaft 20 such that it can be axially moved instead, but without being able to rotate, while it is kept in place, in contact with the gear wheel 24, for example by means of flanges on the gear wheel 24 in the direction Z.

In order to move the hollow shaft 20 in the vertical direction or the direction Z, means 26 are provided which consist of an electric motor 28 fixed on the support 9 by means of a prop 27, whose axis is a spindle 29 which is directed parallel to the shaft 20 and which is screwed in a block 30 surrounding the top end of the hollow shaft 20 like a bush with one part, on the place of a groove, such that the hollow shaft 20 can rotate but is solidary with the block 30 in the direction Z.

As the spindle 29 is being driven, the block 30 is moved up or down, depending on the sense of rotation. The hollow shaft 20 is moved along in the same sense.

The above-mentioned linear movement in the direction Y of the head 10 in relation to the supporting member 19 is obtained by means 31 which consist of an electric motor 32, mounted on the part 9A by means of a prop 32A, a jack mechanism 33 and a transmission 34 between the shaft of the motor 32 and the jack mechanism 33.

The jack mechanism 33 contains two spindles 35 extending in the direction Y and supported in a rotating manner in downward directed edges 19A of the supporting member 19, and which are screwed through one and the same block 36 which is fixed on a horizontal plate 37 onto which the head 10 is attached by means of a connecting piece 38.

The transmission 34 contains a gear wheel 39 which is provided on the shaft of the motor 32 such that it can move but also rotate along, and which sticks for example with one rib on the inside in an axially directed groove in the shaft, and which meshes in a gear wheel 40 which is fixed to a conical gear wheel 41 situated underneath it. This pair of gear wheels 40 and 41 surrounds the hollow shaft 20 in a rotating manner, but it is kept in place on the shaft 20 in the direction Z by means of clamped rings 42.

In order to maintain the contact between the gear wheel 39 and the gear wheel 40 as it moves along with the shaft 20, this gear wheel 39 is provided with two flanges 43 in between which the edge of the gear wheel 40 is situated.

The conical gear wheel 41 meshes in the conical gear wheel 44 which is fixed in a rotating manner on a standing collar 19B of the supporting member 19 and which is solidary with a geared belt wheel 45.

A geared belt 46 extends around the geared belt wheel 45 and two geared belt wheels 47 which, on the outside of the supporting member 19, are fixed on the two spindles 35 respectively.

All the motors 15, 25, 28 and 32 are stepping motors which are controlled by a programmable electronic control device 48.

In order to cut a large figure from a plate 5 with the plasma burner 3, the table 4 is moved such that the intersection of the plasma torch 11 with the plate surface follows the correct pattern.

In order to obtain that one edge of the cut 49 is perpendicular to the plate surface, the plasma torch 11 is rotated around the direction X by the means 13. Its angle is set as a function of the thickness and the material of the plate 5.

During said rotation, the point of the plasma torch 11 moves in the direction Y, over the distance indicated with BY in figure 2, and in the direction Z over a smaller distance indicated by HZ in figure 2.

On the basis of the rotation, carried out by the motor 15 in view of the revolution of the plasma torch 11, the control device 48 knows said distances BY and HZ, and it will put the means 31 and 26 into operation by means of compensation.

Via the gear wheels 39, 40 and 41 and the conical gear wheel 44, the motor 32 drives the geared belt wheel 45 which makes the geared belt wheels 47 and thus the spindles 35 rotate via the geared belt 46, as a result of which the head 10 is moved in a linear manner in relation to the supporting member 19.

The motor 28 rotates in view of the movement in the direction Z, as a result of which the block 30 is moved over the spindle 29 and carries along the hollow shaft 20.

Small, round pieces can be cut out of the plate 5 by moving the head 10 in the direction Y with the help of the means 31 and by placing its vertical axis eccentrically in relation to the geometric axis of the hollow shaft 20, and by subsequently rotating the hollow shaft 20 with the help of the means 22.

The motor 25 rotates this hollow shaft 20 via the gear wheels 24 and 23.

As also the supporting member 19 is rotated, the gear wheels 40 and 41 have to be rotated by the motor 32 to the same extent in order to prevent the conical gear wheel 44 from being moved in relation to the conical gear wheel 41, and thus from being rotated, as a result of which the spindles 35 would be driven.

For other small figures, the head 10 can possibly be moved in a linear manner by the means 31 while being simultaneously rotated as such around the geometric axis of the hollow shaft 20 or while carrying out a circular movement around this geometric axis.

Small figures can be cut without moving the table 4, and thus relatively fast.

The present invention is by no means limited to the above-described embodiment represented in the accompanying drawings; on the contrary, such an improved plasma burner can be made in all sorts of variants while still remaining within the scope of the invention.

## Claims

1. Plasma burner for cutting, containing a support (9) and a plasma torch (11) provided on it, **characterised in that** the plasma torch (11) is provided on a head (10), and can rotate in relation to this head (10) according to an axis which is directed in a direction, hereafter called the direction X, which stands diagonally to its longitudinal direction, whereas means (13) are provided to make this plasma torch (11) rotate around said axis in relation to the head (10), and the head (10) can move in relation to the support (9) at least in the direction Y standing at right angles to it, whereas the plasma burner (3) contains means (31) to make the head (10) move at least in the direction Y in relation to the support (9).

2. Plasma burner according to claim 1, **characterised in that** the head (10) can also be moved in the direction X in relation to the support (9), and **in that** the plasma burner (3) contains means (22) to move this head (10) in the direction X in relation to the support (9).

3. Plasma burner according to claim 2, **characterised in that** the head (10) can be moved in the directions X and Y as is it can be moved in a linear manner in one of these directions, preferably in the direction Y, and as moreover it can be rotated in relation to the support (9) around an axis which is at right angles to these directions and which is thus directed in the direction Z, whereas the means (31; 22) for moving the head (10) in the directions X and Y contain means (22) to make the head (10) rotate around an axis in the direction Z, and means to move the head (10) in a linear manner in relation to the support (9) in the direction X or Y, and thus preferably in the direction Y.

4. Plasma burner according to claim 3, **characterised in that** the head (10) can be moved in a linear manner in relation to a supporting member (19) which is fixed to a shaft (20) directed in the direction Z which is mounted in the support (9) in a rotating manner.

5. Plasma burner according to any of the preceding claims, **characterised in that** the head (10) can also be moved in relation to the support (9) in the direction Z, which is at right angles to the directions X and Y, whereas the plasma burner (3) contains means (26) to move the head (10) in relation to the support (9) in said direction Z.

6. Plasma burner according to claims 4 and 5, **characterised in that** the means (22) for rotating the head (10) and the means (26) for moving the head (10) in the direction Z are means to make the shaft (20) rotate and move in the direction Z respectively.

7. Plasma burner according to claim 6, **characterised in that** the means (22) for rotating the shaft (20) standing on the supporting member (19) and directed in the direction Z in relation to the support (9), the means (31) for moving the head (10) in a linear manner in relation to the supporting member (19), at right angles to the Z axis, and the means (26) for moving said shaft (20) in the direction Z, each contain a motor (25; 32; 28) provided on the support (9).

8. Plasma burner according to claim 7, **characterised in that** the motor (25) of the means (26) for rotating the shaft (20) is coupled to the shaft (20) via a geared transmission with two meshing gear wheels (23 and 24), whereby the gear wheel (23) surrounding the shaft (20) can be moved in relation to the other gear wheel (24) in the direction Z without the engagement being lost, or whereby the first-mentioned gear wheel (23) is provided on the shaft (20) such that it can be axially moved on it.

9. Plasma burner according to claim 7, **characterised in that** the motor (28) of the means (26) for moving the shaft (20) in the direction Z drives a spindle (29) which is directed perpendicular to said shaft (20) which is screwed in a block (30) in which the shaft (20) is mounted such that it can rotate but cannot move in the direction Z.

10. Plasma burner according to claim 7, **characterised in that** the means (31) for moving the head (10) in a linear manner in relation to the supporting member (19), contain a jack mechanism (33) with at least one spindle (25) which is mounted on the supporting member (19) in a rotating manner, which is screwed through a block (36) with which the head (10) is connected and which is coupled to the motor (32) by means of a transmission (34).

11. Plasma burner according to claim 10, **characterised in that** the transmission (34) contains a gear wheel (39) which is provided on the shaft of the motor (32) such that it can be moved in the direction Z, and which meshes in a gear wheel (46) provided loosely around the shaft (20) and which is solidary with a conical gear wheel (41) which is also provided loosely around the shaft (20) and which drives a conical gear wheel (44) provided on the supporting member (19) and coupled to the spindle (35).

12. Plasma burner according to claim 11, **characterised in that** two spindles (35) are provided on the supporting member (19) which each carry a geared belt wheel (47), and **in that** a geared belt (46) is provided over these geared belt wheels (47) and over a third geared belt wheel (45) which is fixed to the conical gear wheel (44) provided on the supporting member (19).

13. Plasma burner according to any of the preceding claims, **characterised in that** the means (13) for rotating the plasma torch (11) in relation to the head (10) are provided on the head (10).

14. Plasma burner according to claim 13, **characterised in that** the means (13) for rotating the plasma torch (11) in relation to the head (10) contain a motor (15) provided on this head (10) and a transmission (16-17-18) between this motor (15) and the shaft (14) upon which the plasma torch (11) is fixed.

15. Plasma burner according to claims 7 and 14, **characterised in that** it contains a computer-controlled electronic control device (48) which drives the motors (15,25,28,32).
